(19) Europäisches Patentamt / European Patent Office / Office européen des brevets

(11) **EP 1 908 937 A1**

(12) **DEMANDE DE BREVET EUROPEEN**

(43) Date de publication:
**09.04.2008 Bulletin 2008/15**

(51) Int Cl.:
***F02B 37/02*** *(2006.01)*

(21) Numéro de dépôt: **07301247.8**

(22) Date de dépôt: **18.07.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **26.09.2006 FR 0608415**

(71) Demandeur: **RENAULT S.A.S.**
**92100 Boulogne Billancourt (FR)**

(72) Inventeur: **Lefebre, Alain**
**91620, Nozay (FR)**

(54) **Moteur a combustion interne suralimenté et procédé de suralimentation**

(57) Moteur à combustion interne suralimenté comprenant un turbocompresseur muni d'un compresseur entraîné en rotation par une turbine, le compresseur communiquant avec un répartiteur (4) des gaz admis dans les cylindres du moteur, la turbine (2) communiquant avec un collecteur (9) des gaz d'échappement issus des cylindres (1) du moteur, caractérisé par le fait qu'il comprend un réservoir d'accumulation (15) pouvant être mis en communication avec les gaz d'échappement, avant leur passage à travers la turbine, par un conduit de communication (16) comportant un moyen d'obturation ouvrable (17).

## FIG.1

EP 1 908 937 A1

## Description

La présente invention a pour objet un moteur à combustion interne suralimenté ainsi qu'un procédé perfectionné de suralimentation d'un tel moteur à combustion interne permettant d'améliorer les performances du moteur.

L'invention peut s'appliquer à tous types de moteurs suralimentés, qu'il s'agisse des moteurs de type Diesel ou des moteurs à allumage commandé.

Les objectifs de performances et de consommation des moteurs à combustion interne suralimentés rendent de plus en plus difficile la réalisation de turbocompresseurs bénéficiant d'une plage de fonctionnement suffisamment large pour satisfaire au compromis souhaité entre l'obtention d'un couple satisfaisant à bas régime de rotation du moteur et l'obtention d'une puissance aussi importante que possible pour le moteur. On constate en particulier, pour les phases de fonctionnement du moteur à bas régime de rotation, une insuffisance d'énergie récupérable par la turbine pour l'entraînement du compresseur destiné à comprimer le mélange de gaz admis dans le moteur. Il est en effet nécessaire que le débit des gaz admis, qui comprennent généralement un mélange d'air et de gaz d'échappement recyclés, soit suffisant pour assurer un remplissage convenable des cylindres du moteur afin de garantir les performances du moteur, et en particulier les capacités d'accélération à bas régime.

Dans la demande de brevet français 2 872 858 (RENAULT), on a décrit un moteur thermique suralimenté équipé d'un compresseur supplémentaire en vue d'une introduction d'un débit d'air comprimé supplémentaire en amont de la turbine. De cette manière, on augmente l'énergie fournie par la turbine au compresseur entraîné par la turbine et destiné à comprimer l'air admis dans les cylindres du moteur. Une telle réalisation présente cependant l'inconvénient de nécessiter l'adjonction d'un compresseur supplémentaire, ce qui augmente la complexité et le coût du moteur.
On connaît par ailleurs, par la demande de brevet français 2 804 178 (RENAULT), un système de suralimentation à rendement amélioré, en particulier aux bas régimes de rotation du moteur. Dans ce document, on prévoit une dérivation de l'air comprimé issu du compresseur du turbocompresseur, de façon que le compresseur soit traversé par un débit d'air supérieur au débit d'air d'alimentation admis dans le moteur. De cette manière, on augmente le rendement du turbocompresseur sans pour autant modifier le débit d'air admis dans le moteur. Pour autant, cette solution connue ne permet pas d'améliorer les performances du moteur, en particulier pendant les phases d'accélération du véhicule.

La présente invention a pour objet un moteur à combustion interne suralimenté et un procédé de suralimentation qui permettent d'améliorer les performances du moteur, non seulement en régime stabilisé, mais également pendant les phases transitoires, notamment les accélérations à bas régime de rotation du moteur.

L'invention a également pour objet la conception d'un tel moteur à combustion interne suralimenté à performances améliorées grâce à des moyens particulièrement simples, ne nécessitant pas l'adjonction d'organes complexes.

L'invention concerne les moteurs à combustion interne suralimentés du type comprenant un turbocompresseur muni d'un compresseur entraîné en rotation par une turbine. Le compresseur communique avec un répartiteur des gaz admis dans les cylindres du moteur. La turbine communique avec un collecteur des gaz d'échappement issus des cylindres du moteur. Dans un mode de réalisation, le moteur comprend un réservoir d'accumulation pouvant être mis en communication avec les gaz d'échappement, avant leur passage à travers la turbine, par un conduit de communication comportant un moyen d'obturation ouvrable.

Il devient alors possible d'accumuler une partie des gaz d'échappement à haute pression directement issus des cylindres du moteur, pendant certaines phases de fonctionnement du moteur au cours desquelles le débit des gaz d'échappement traversant la turbine excède le débit nécessaire à l'entraînement en rotation du compresseur. Puis, lorsque l'énergie fournie au compresseur par la turbine est insuffisante pour entraîner le compresseur, on peut utiliser les gaz sous pression accumulés dans le réservoir pendant la phase précédente, pour augmenter le débit des gaz traversant la turbine et ainsi obtenir un taux de compression satisfaisant pour les gaz admis dans le moteur.

De cette manière, il est possible d'améliorer les performances du moteur, notamment en ce qui concerne les capacités d'accélération à bas régime de rotation c'est-à-dire précisément lorsque l'énergie fournie par la turbine au compresseur est souvent insuffisante.

Dans un mode de réalisation préféré, le réservoir peut être mis en communication par un deuxième conduit comportant un deuxième moyen d'obturation ouvrable, avec une conduite véhiculant les gaz d'échappement avant leur passage à travers la turbine.

De préférence, ce deuxième conduit sera utilisé comme conduit de sortie pour réinjecter en amont de la turbine une partie des gaz sous pression accumulés dans le réservoir et amenés dans celui-ci par le conduit de communication précité jouant le rôle d'un conduit d'entrée.

Dans un mode de réalisation avantageux, le réservoir peut également être mis en communication par un conduit supplémentaire comportant un moyen d'obturation ouvrable, avec les gaz admis, avant leur admission dans les cylindres du moteur.

Ces gaz admis sont en effet à pression élevée, ayant été comprimés par le compresseur. Le mélange de gaz sous pression ainsi accumulés dans le réservoir peut ensuite, comme précédemment être utilisé pour augmenter l'énergie fournie par la turbine.

Le conduit de communication peut être piqué directement sur le carter de la turbine ou sur le collecteur d'échappement.

La turbine peut être à géométrie variable ou au contraire être associée à une vanne de décharge commandée montée dans une dérivation pour faire varier le débit des gaz d'échappement traversant la turbine.

Dans le cas d'une telle dérivation, le conduit de communication peut avantageusement être piqué directement sur ladite dérivation.

Au moins un moyen d'obturation ouvrable peut comprendre un clapet anti-retour.

Au moins un moyen d'obturation ouvrable peut comprendre une vanne commandée.

Dans le cas de clapets anti-retour, l'ouverture ou la fermeture de la communication dépendra de la différence de pression aux bornes du clapet anti-retour.

Lorsqu'on prévoit des vannes commandées, la commande pourra être effectuée par une unité électronique de commande déjà prévue pour la commande du fonctionnement du moteur. Ces vannes pourront être actionnées électriquement ou par des moyens hydrauliques ou pneumatiques.

Selon un autre aspect, l'invention a également pour objet un procédé de suralimentation d'un moteur à combustion interne dans lequel, pendant une phase de fonctionnement, on accumule une partie des gaz d'échappement issus du moteur et n'ayant pas traversé la turbine du turbocompresseur puis, pendant une autre phase de fonctionnement, on réinjecte en amont de la turbine, au moins une partie des gaz ainsi accumulés.

On peut également ajouter aux gaz d'échappement accumulés, pendant une phase de fonctionnement, une partie des gaz admis dans le moteur puis, pendant une autre phase de fonctionnement, réinjecter en amont de la turbine, au moins une partie du mélange des gaz ainsi accumulés.

L'invention sera mieux comprise à l'étude de quelques modes de réalisation décrits à titre d'exemples nullement limitatifs et illustrés par les dessins annexés, sur lesquels

- la figure 1 représente schématiquement un moteur à combustion interne suralimenté, selon un premier mode de réalisation de l'invention;

- la figure 2 est une vue analogue à la figure 1, illustrant un deuxième mode de réalisation; et

- la figure 3 est une vue analogue, illustrant un troisième mode de réalisation.

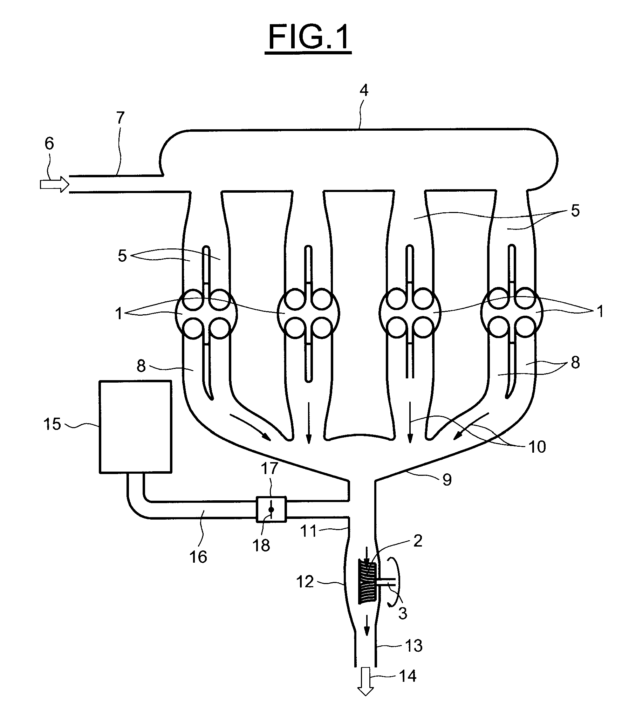

Tel qu'il est représenté sur la figure 1, le moteur à combustion interne suralimenté comprend quatre cylindres 1 et un turbocompresseur dont seule la turbine 2 est illustrée sur la figure. La turbine 2 comprend un arbre 3 qui entraîne en rotation un compresseur, non illustré sur la figure, et destiné à comprimer l'air admis dans le moteur. Les différents cylindres 1 reçoivent un mélange de gaz provenant d'un répartiteur d'admission 4, auquel sont reliées les différentes conduites d'admission 5. L'air comprimé ou le mélange de gaz, schématisé par la flèche 6, pénètre dans le répartiteur d'admission 4 par une conduite d'admission 7.

Les différentes conduites d'échappement 8, issues des cylindres 1, se rejoignent dans un collecteur d'échappement 9 qui reçoit l'ensemble des gaz d'échappement, symbolisés par les flèches 10, provenant des différents cylindres 1. Le collecteur 9 est relié par une conduite d'échappement Il au carter 12 de la turbine 2. Les gaz d'échappement issus des cylindres 1 sont donc amenés à passer à travers la turbine 2, entraînant celle-ci en rotation en se détendant avant d'être rejetés par la ligne d'échappement 13. Les gaz d'échappement détendus sont symbolisés par la flèche 14.

Un réservoir d'accumulation 15 étanche est relié par un conduit de communication 16 à la conduite d'échappement Il, c'est-à-dire, dans l'exemple illustré sur la figure 1, entre le collecteur d'échappement 9 et l'entrée du carter de turbine 12. Le conduit de communication 16 comporte un moyen d'obturation ouvrable 17, qui est représenté sur la figure 1 sous la forme d'un clapet pivotant 18, qui peut être commandé de manière appropriée en fonction des différentes phases de fonctionnement du moteur, par exemple par une unité de commande électronique, non représentée sur la figure.

Le moyen d'obturation 17 peut également comprendre un simple clapet anti-retour, qui laisse alors passer les gaz d'échappement en direction du réservoir d'accumulation 15 lorsque la pression régnant à l'intérieur du réservoir est inférieure à la pression des gaz d'échappement issus des cylindres 1. Un tel clapet anti-retour peut être associé à une vanne commandée capable d'autoriser la sortie d'une partie des gaz sous pression contenus dans le réservoir 15.

La structure illustrée sur la figure 1 permet d'augmenter le débit des gaz traversant la turbine 2, de façon à accroître l'énergie fournie par la turbine 2 au compresseur associé et améliorer ainsi le fonctionnement du moteur, non seulement en régime stabilisé, mais également et surtout en phase transitoire, notamment lors d'accélérations à bas régime de rotation.

La turbine 2 reçoit en effet les gaz chauds issus des différents cylindres 1 et transitant par le collecteur d'échappement 2 du moteur.

L'énergie W, fournie par la turbine est donnée par l'équation:

$$W, = mCp(T,_{m,,",} - T,_{,,,,})$$

où

m désigne le débit massique des gaz traversant la turbi-

ne, $C_p$ est la capacité calorifique des gaz traversant la turbine, $T,m''''$ est la température des gaz en amont de la turbine,

et $T''''$ est la température des gaz en aval de la turbine.

La présente invention permet d'accroître l'énergie fournie par la turbine, en augmentant le débit massique m. A cet effet, on récupère les gaz brûlés provenant de la combustion dans les différents cylindres 1 pendant les phases où le débit des gaz d'échappement traversant la turbine 2 est excédentaire, c'est-à-dire supérieur au débit nécessaire pour assurer la compression convenable des gaz admis dans le moteur par le compresseur lié mécaniquement à la turbine 2. Les gaz d'échappement excédentaires sont accumulés dans le réservoir 15 et maintenus sous pression dans ce réservoir. Puis, en fonction des besoins, les gaz sous pression contenus dans le réservoir 15 peuvent ensuite être en partie réinjectés en amont de la turbine 2, de manière à générer un débit de gaz supplémentaire et augmenter l'énergie fournie par la turbine.

Pendant une première phase de fonctionnement, les gaz d'échappement sont ainsi amenés par le conduit de communication 16 à travers le moyen d'obturation 17 qui est alors ouvert, jusqu'au réservoir d'accumulation 15. Lorsque le moyen d'obturation 17 est un clapet anti-retour, on évite les retours de gaz brûlés qui pourraient perturber le fonctionnement de la turbine 2. Lorsque le moyen d'obturation est une vanne commandée, on peut maintenir le réservoir à une pression de consigne. Lorsque la pression de consigne du réservoir a été atteinte, le moyen d'obturation peut alors être fermé, les gaz d'échappement traversant la turbine 2.

Pendant les phases de forte demande de performances du moteur, notamment à bas régime, lors d'une demande de couple du moteur correspondant à une demande d'accélération du véhicule par enfoncement de la pédale d'accélérateur, les gaz sous pression accumulés dans le réservoir 15 se trouvant à une pression plus importante que les gaz d'échappement véhiculés par le collecteur d'échappement 9, le moyen d'obturation 17 peut être commandé à l'ouverture s'il s'agit d'une vanne commandée, de façon à injecter une partie au moins des gaz sous pression accumulés dans le réservoir 15, en augmentant ainsi le débit massique des gaz traversant la turbine 2. On constate alors une augmentation des performances du moteur. En variante, le moyen d'obturation peut comporter un clapet anti-retour capable de s'ouvrir automatiquement dès que la pression dans le réservoir 15 dépasse d'une quantité déterminée la pression régnant dans la conduite 11. On peut associer dans le moyen d'obturation 17 deux clapets anti-retour montés en opposition ou associer un clapet anti-retour à une vanne commandée.

En-dehors des phases de réinjection des gaz sous pression accumulés, le moteur fonctionne normalement, les gaz d'échappement traversant la turbine 2 sans alimenter le réservoir 15.

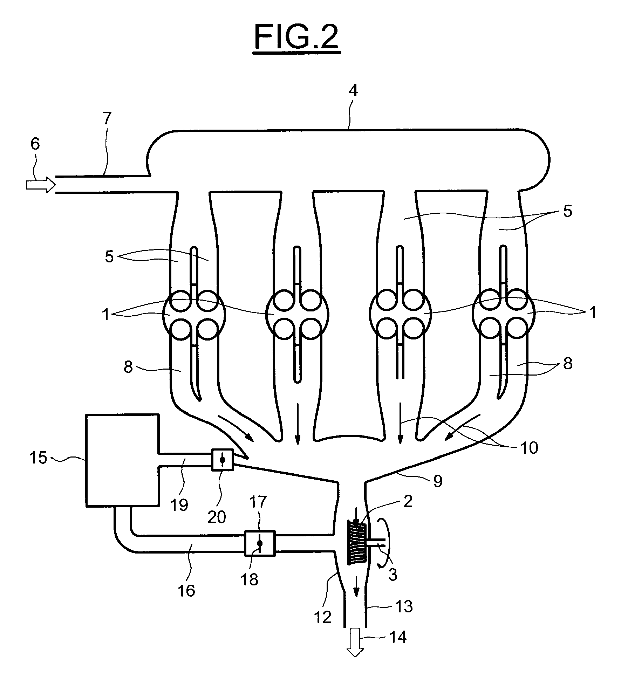

Dans le mode de réalisation illustré sur la figure 2, sur laquelle les éléments analogues portent les mêmes références, le conduit de communication 16 muni du moyen d'obturation 17 est piqué directement sur le carter 12 de la turbine 2. De plus, un deuxième conduit 19 équipé d'un deuxième moyen d'obturation ouvrable 20 permet de mettre en communication le réservoir 15 avec le collecteur d'échappement 9.

Dans ce mode de réalisation, le second moyen d'obturation 20 permet d'obturer le deuxième conduit 19, qui joue le rôle d'un conduit de sortie pour la ré-injection des gaz sous pression accumulés dans le réservoir 15 jusque dans le collecteur d'échappement 9.

Pendant les phases de fonctionnement du moteur permettant le remplissage du réservoir 15, c'est-à-dire lorsque la pression régnant dans le réservoir 15 est inférieure à une pression de consigne, le moyen d'obturation 17 est ouvert, ce qui permet de remplir le réservoir 15 par le conduit de communication 16 qui joue le rôle de conduit d'entrée. Pendant cette phase, le moyen d'obturation 20 est fermé, ce qui assure l'étanchéité du réservoir 15. Une fois la pression de consigne du réservoir 15 atteinte, le moyen d'obturation 17 est fermé, les gaz d'échappement traversant alors en totalité la turbine 2.

Pendant les phases de forte demande de performances du moteur à bas régime, le moyen d'obturation 17 est fermé et le moyen d'obturation 20 ouvert, libérant les gaz sous pression accumulés dans le réservoir 15. Comme précédemment, le débit de gaz supplémentaire ainsi généré alimente la turbine 2, augmentant ainsi l'énergie disponible sur la turbine, et donc les performances de celle-ci et du moteur. Comme précédemment, les différents moyens d'obturation 17 et 20 peuvent comporter des clapets anti-retour convenablement disposés pour autoriser l'entrée ou la sortie des gaz accumulés dans le réservoir 15 en fonction des différences de pression. Des vannes commandées peuvent également être utilisées, soit seules, soit en combinaison avec des clapets anti-retour.

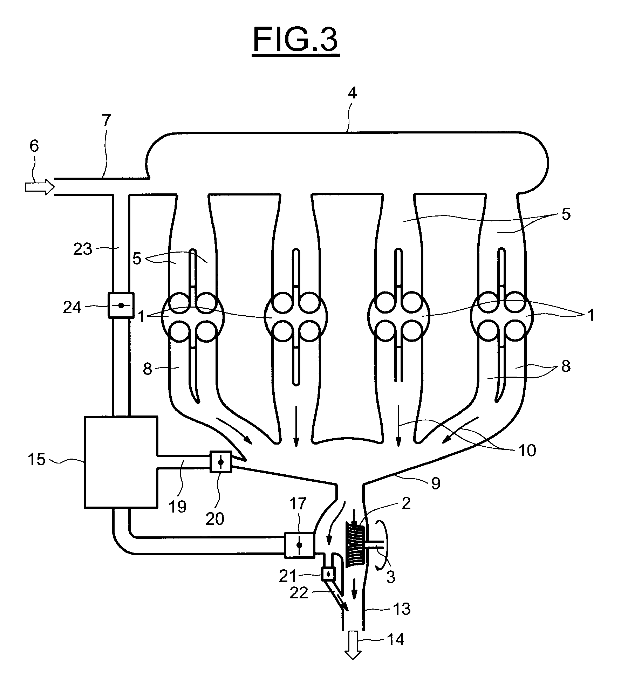

Dans le mode de réalisation illustré sur la figure 3, sur laquelle les organes analogues portent les mêmes références, la turbine 2 est en outre associée à une vanne de décharge 21 montée dans une dérivation représentée symboliquement et référencée 22, cette dérivation étant pratiquée dans le carter même de la turbine 2.

De plus, dans le mode de réalisation illustré sur la figure 3, le réservoir d'accumulation 15 est également relié par un conduit supplémentaire 23 équipé d'un moyen d'obturation ouvrable 24 à la conduite d'admission 7, en amont du répartiteur d'admission 4.

De cette manière, il est possible d'alimenter le réservoir d'accumulation 15, non seulement par des gaz brûlés provenant de la combustion dans les cylindres 1, mais également avec de l'air frais provenant de l'admission ou d'un mélange d'air frais et de gaz brûlés lorsque les gaz d'échappement sont en partie recyclés à l'admission par un circuit de recirculation dit «circuit EOR».

On obtient de cette manière, comme précédemment, une augmentation du débit massique traversant la turbine 2 lorsque les gaz sous pression accumulés dans le réservoir 15 sont réinjectés à l'entrée de la turbine 2. Dans l'exemple illustré sur la figure 3, cette ré-injection se fait par le deuxième conduit 19 lorsque le moyen d'obturation 20 est ouvert. On comprendra que cette ré-injection pourrait également se faire grâce aux moyens plus simples illustrés sur la figure 1, c'est-à-dire dans le cas où le réservoir 15 est en communication à la fois pour l'entrée et la sortie des gaz d'échappement, uniquement par le conduit de communication 16.

Dans le mode de réalisation illustré sur la figure 3, où les gaz supplémentaires réinjectés à l'entrée de la turbine 2 comportent une proportion plus importante d'air frais provenant de l'admission par le conduit supplémentaire 23, on peut obtenir une post-oxydation des imbrûlés en amont de la turbine par cet apport d'air frais qui se trouve alors mélangé aux gaz d'échappement. Une telle post-oxydation d'hydrocarbures imbrûlés permet un dégagement de chaleur supplémentaire capable d'apporter un surcroît d'énergie à la turbine 2 et d'améliorer encore les performances du moteur, à la fois en régime stabilisé et en phase transitoire lors d'accélérations brutales.

On notera que les vannes commandées susceptibles d'équiper les différents moyens d'obturation utilisés dans la présente invention, ainsi que la vanne de décharge 21, peuvent être pilotées par une unité électronique de commande qui assure en outre la gestion du fonctionnement du moteur. L'actionnement de ces différents moyens d'obturation peut être fait de façon électrique, pneumatique ou mécanique, ou par tout autre dispositif approprié.

**Revendications**

1. Moteur à combustion interne suralimenté comprenant un turbocompresseur muni d'un compresseur entraîné en rotation par une turbine, le compresseur communiquant avec un répartiteur (4) des gaz admis dans les cylindres du moteur, la turbine (2) communiquant avec un collecteur (9) des gaz d'échappement issus des cylindres (1) du moteur, **caractérisé par le fait qu'**il comprend un réservoir d'accumulation (15) pouvant être mis en communication avec les gaz d'échappement, avant leur passage à travers la turbine, par un conduit de communication (16) comportant un moyen d'obturation ouvrable (17).

2. Moteur selon la revendication 1 dans lequel le réservoir (15) peut être mis en communication par un deuxième conduit (19) comportant un deuxième moyen d'obturation ouvrable (20), avec une conduite véhiculant les gaz d'échappement avant leur passage à travers la turbine.

3. Moteur selon l'une des revendications précédentes dans lequel le réservoir (15) peut être mis en communication par un conduit supplémentaire (23) comportant un moyen d'obturation ouvrable (24), avec les gaz admis, avant leur admission dans les cylindres du moteur.

4. Moteur selon l'une des revendications précédentes dans lequel le conduit de communication est piqué sur le carter (12) de la turbine (2).

5. Moteur selon l'une des revendications précédentes dans lequel la turbine est associée à une vanne de décharge (21) commandée montée dans une dérivation (22) pour faire varier le débit des gaz d'échappement traversant la turbine.

6. Moteur selon la revendication 5 dans lequel le conduit de communication est piqué sur ladite dérivation.

7. Moteur selon l'une des revendications précédentes dans lequel au moins un moyen d'obturation ouvrable comprend un clapet anti-retour.

8. Moteur selon l'une des revendications précédentes dans lequel au moins un moyen d'obturation ouvrable comprend une vanne commandée.

9. Procédé de suralimentation d'un moteur à combustion interne **caractérisé par le fait que**, pendant une phase de fonctionnement, on accumule une partie des gaz d'échappement issus du moteur et n'ayant pas traversé la turbine du turbocompresseur puis, pendant une autre phase de fonctionnement, on réinjecte en amont de la turbine, au moins une partie des gaz ainsi accumulés.

10. Procédé selon la revendication 9 dans lequel on ajoute aux gaz d'échappement accumulés, pendant une phase de fonctionnement, une partie des gaz admis dans le moteur puis, pendant une autre phase de fonctionnement, on réinjecte en amont de la turbine, au moins une partie du mélange des gaz ainsi accumulés.

## FIG.1

# FIG.2

# FIG.3

**Office européen des brevets**

**RAPPORT DE RECHERCHE EUROPEENNE**

Numéro de la demande

EP 07 30 1247

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X <br> Y | DE 198 33 134 C1 (DAIMLER CHRYSLER AG [DE]) 11 novembre 1999 (1999-11-11) <br> * colonne 4, ligne 28 - ligne 62; figure 1 * | 1,3,5, 7-10 <br> 4 | INV. <br> F02B37/02 |
| A <br> Y | DE 80 23 061 U1 (NOVA-WERKE AG, EFFRETIKON) 26 février 1981 (1981-02-26) <br> * page 8, alinéa 1 - page 11, alinéa 2; figure 1 * | 1,9 <br> 4 | |
| A | US 6 434 939 B1 (BEVERIDGE JOHN HERBERT [US]) 20 août 2002 (2002-08-20) <br> * colonne 4, ligne 50 - ligne 63; figure 1 * | 1,9 | |

**DOMAINES TECHNIQUES RECHERCHES (IPC)**

F02B

Le présent rapport a été établi pour toutes les revendications

| Lieu de la recherche | Date d'achèvement de la recherche | Examinateur |
|---|---|---|
| Munich | 10 janvier 2008 | Tietje, Kai |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

## ANNEXE AU RAPPORT DE RECHERCHE EUROPEENNE
## RELATIF A LA DEMANDE DE BREVET EUROPEEN NO.

EP 07 30 1247

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2008

| Document brevet cité au rapport de recherche | Date de publication | Membre(s) de la famille de brevet(s) | Date de publication |
|---|---|---|---|
| DE 19833134 C1 | 11-11-1999 | AUCUN | |
| DE 8023061 U1 | 26-02-1981 | AUCUN | |
| US 6434939 B1 | 20-08-2002 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2872858, RENAULT

- FR 2804178, RENAULT